# EUROPEAN PATENT SPECIFICATION

(11) **EP 3 925 775 B1**
(45) Date of publication and mention of the grant of the patent: **15.11.2023**
(21) Application number: 21185001.1
(22) Date of filing: 28.01.2014
(51) Int. Cl.: B32B 21/14, C08H 7/00, C08G 8/20, C08L 97/00, C09J 161/12, C09J 197/00, B32B 21/13, C09D 5/00

(54) **CROSS-LAMINATED PLYWOOD PRODUCTION**
HERSTELLUNG VON QUERBESCHICHTETEM SPERRHOLZ
PRODUCTION DE CONTREPLAQUÉ STRATIFIÉ CROISÉ

(43) Date of publication of application: 22.12.2021
(62) Divisional of application: 18197918.8
(73) Proprietor: UPM Plywood Oy, 15140 Lahti (FI)
(72) Inventor: Koski, Anna, 15610 Lahti (FI); Taavila, Kati, 15100 Lahti (FI)
(74) Representative: Hoffmann Eitle

(56) References cited:
- WO-A1-2013/144453
- GB-A- 1 504 451
- US-A- 5 173 527
- US-A- 5 202 403
- US-A1- 2005 257 888

## Description

### FIELD OF THE INVENTION

The invention relates to a method for producing cross-laminated plywood, to cross-laminated plywood, to the use of an aqueous binder composition for producing cross-laminated plywood, and to further uses of the binder composition.

### BACKGROUND OF THE INVENTION

Lignin is a natural polymer, which can be extracted from *e.g.* wood. As lignin is a natural biopolymer its use as a component in binder compositions instead of synthetic materials has been investigated in order to come up with a more environmentally friendly composition. Especially, the ability to replace synthetic phenol in final phenolic resins, such as phenol formaldehyde resin, has been the object of prior art.

Prior art discloses different types of binder compositions, such a phenolic glues, to be used with wood products. Examples of such glues include compositions comprising phenol formaldehyde resin. Traditionally synthetic phenol formaldehyde resins are produced by polymerizing phenol and formaldehyde in the presence of a catalyst. Examples of such catalysts are sodium hydroxide (NaOH) and acids. The method for producing phenol formaldehyde resin comprises adding formaldehyde in a stepwise manner to a phenol composition and thereafter rising the temperature of the formed composition up to 80 - 90 °C. The composition is cooked at this temperature until a desired viscosity of the formed resin or polymer chain length is reached.

Prior art recognizes the use of lignin for the purpose of decreasing the amount of synthetic phenol in a resin composition. Lignin has previously been used for replacing phenol during the production of lignin-phenol-formaldehyde resin.

Prior art further recognizes the use of a binder composition for the production of plywood. There are different types of plywood, i.e. cross-laminated and laminated veneer lumber. Both types of plywood comprise multiple layers of thin wood assembled with adhesives, but the grain direction is different in these two types of plywood.

US 5 202 403 A describes a lignin-modified phenol-formaldehyde resin being useful in adhesive compositions for making boards such as plywood or particle board. WO 2013/144453 A1 is concerned with a method for producing a binder composition including the formation of an aqueous composition comprising lignin molecules of 11-60 lignin units, lignin units of 1-10 lignin units, polymerizable substance and crosslinking agent. US 5 173 527 A relates to a fast curing thermosetting adhesive obtained by crosslinking binary phenol-formaldehyde consisting of high average molecular weight phenolformaldehyde (PF) resin and low average molecular weight PF resin with lignin, which can be used in the manufacture of boards and panels. GB 1 504 451 A describes an adhesive for the manufacture of wood products comprising an alkali lignin and a phenol-formaldehyde resin, wherein at least 50 wt.-% of the alkali lignin has a molecular weight of over 5000. US 2005/257888 A1 concerns adhesive compositions comprising a thermosetting phenol-aldehyde resin of a certain molecular weight and their use in producing laminated veneer lumber.

The inventors have recognized a need for a bio-based binder composition having properties suitable for specific purposes and especially for the production of cross-laminated plywood.

### PURPOSE OF THE INVENTION

The purpose of the invention is to provide a new type of method for producing cross-laminated plywood and to provide a new type of cross-laminated plywood. Further, the purpose of the invention is to provide different uses of an aqueous binder composition.

### SUMMARY

The method for producing cross-laminated plywood according to the present invention is characterized by what is presented in claim 1.

The use of the aqueous binder composition for the production of cross-laminated plywood according to the present invention is characterized by what is presented in claim 8.

The cross-laminated plywood according to the present invention is characterized by what is presented in claim 18.

The plywood according to the present invention is characterized by what is presented in claim 27.

The use of the binder composition according to the present invention is characterized by what is presented in claim 29.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 represents the results received from DCS measurements (chemical hardening);
Fig. 2 represents the results received from ABES measurements (mechanical hardening); and
Fig. 3 represents the results received from ABES measurements (operating window).

### DETAILED DESCRIPTION OF THE INVENTION

The present invention relates to a method for producing cross-laminated plywood, wherein the method comprises applying an aqueous binder composition on at least one surface of at least one veneer, wherein the aqueous binder composition is prepared by using at least polymerizable substance and crosslinking agent, and wherein:
- at least 20 weight-% of the polymerizable substance originates from lignin;
- at least 50 % of the molecules in the binder composition have a molecular weight of above 3000 Da and at least 5 % of the molecules in the binder composition have a molecular weight of below 1000 Da; and
- the polydispersity index of the binder composition is 6 or higher.

The inventors of the present invention surprisingly found out that a binder composition with the above specified properties enables a more flexible process for cross-laminated plywood production. Especially, it was found out that the so-called operating window, i.e. the time that can be used between applying the binder composition on the surface of a veneer before it is joined by pressing with another veneer, could be extended without compromising the final bonding strength when using this kind of a binder composition. Without limiting the invention to any specific theory of why the above advantage can be achieved, it is to be considered that the rather high polydispersity index together with the specific molecular weight distribution of the binder composition beneficially affects the properties of the bio-based binder composition such that the so-called operating window of the plywood production process can be extended.

The present invention further relates to cross-laminated plywood comprising at least two veneers glued together with an aqueous binder composition, which is prepared by using at least polymerizable substance and crosslinking agent, and wherein:
- at least 20 weight-% of the polymerizable substance originates from lignin;
- at least 50 % of the molecules in the binder composition have a molecular weight of above 3000 Da and at least 5 % of the molecules in the binder composition have a molecular weight of below 1000 Da; and
- the polydispersity index of the binder composition is 6 or higher.

The inventors of the present invention surprisingly found out that the cross-laminated plywood being produced by using the above specified binder composition has a good strength as a result of the fact that the used binder composition has been partly penetrated into the wood material and partly remained in the glue line. As the molecules of the binder composition having a lower molecular weight will penetrate into possible cracks or scratches on the surface and surface layers of the veneers treated with the binder composition, and as the molecules of the binder composition having a higher molecular weight will remain at the glue line, the seam or the interface between two veneers is strengthened compared to a situation where the binder composition would only remain in the glue line or where the binder composition would over-flow or over-penetrate into the treated veneers.

The present invention further relates to the use of an aqueous binder composition for the production of cross-laminated plywood, wherein the aqueous binder composition is prepared by using at least polymerizable substance and crosslinking agent, wherein:
- at least 20 weight-% of the polymerizable substance originates from lignin;
- at least 50 % of the molecules in the binder composition have a molecular weight of above 3000 Da and at least 5 % of the molecules in the binder composition have a molecular weight of below 1000 Da; and
- the polydispersity index of the binder composition is 6 or higher.

The present invention further relates to the use of the binder composition according to the present invention for gluing together at least two veneers.

In this specification, unless otherwise stated, the expression "aqueous binder composition" should be understood as a binder composition, which involves water.

In one embodiment of the present invention at least two veneers are glued together with the binder composition. In one embodiment of the present invention at least two veneers are glued together with the aqueous binder composition under the influence of hot pressing.

In one embodiment of the present invention the veneer is made of softwood. In one embodiment of the present invention the veneer is made of hardwood.

In one embodiment of the present invention, the density of the wood material of the veneer is 320 - 750 kg/m³, and preferably 390 - 650 kg/m³. In one embodiment of the present invention the density of the wood material of the veneer is 390 - 550 kg/m³ or 520 - 650 kg/m³. In one embodiment of the present invention the density of the wood material of the veneer is 450 - 570 kg/m³. The above density values are measured in accordance with standards SFS-EN 384 and ISO 3131 (SFS-EN 384 - Structural timber - Determination of characteristic values of mechanical properties and density (2010), and ISO 3131 - Wood - Determination of density for physical and mechanical tests (1975)).

In one embodiment of the present invention the veneer is selected from a group consisting of pine veneer, poplar veneer, beech veneer, aspen veneer, spruce veneer, and birch veneer. In one embodiment of the present invention the veneer is softwood veneer. In one embodiment of the present invention the veneer is spruce veneer or pine veneer. In one embodiment of the present invention the veneer is birch veneer. In one embodiment of the present invention the cross-laminated plywood comprises veneers of one or more wood material.

In one embodiment of the present invention the at least one veneer is manufactured by one of rotary cutting, flat slicing, quarter slicing, half-round slicing, and rift cutting. These methods are known as such in plywood manufacturing, and different methods result in a slightly different visual appearance of the veneer. Rotary cutting may also be referred to as turning or rotary turning. In one embodiment of the present invention, the at least one veneer is manufactured by rotary cutting. In one embodiment of the present invention, all the veneers used for producing the cross-laminated plywood, are manufactured by rotary cutting. In one embodiment of the present invention, at least 80 %, and preferably 100 %, of the veneers used for the production of the cross-laminated plywood are manufactured by rotary cutting.

Using rotary cutting for manufacturing the at least one veneer, cutting checks or lathe checks are formed in the veneer. Lathe checks create more surface area, which may result in over-penetration and dry-out of the binder composition at the glue-line. Furthermore, lathe checks may exhibit areas of weakness. Lathe checks caused by rotary cutting constitute an important factor in veneer quality. The larger and deeper the lathe checks, the lower the strength and the rougher the veneer surface. The bonding of lathe checks by the binder composition together contributes to improve the veneer mechanical properties. The inventors of the present invention surprisingly found out that the binder composition according to the present invention advantageously affected the bonding of veneers to each other when applied on veneers produced by rotary cutting.

In one embodiment of the present invention the thickness of the at least one veneer is 0.5 - 4 mm, preferably 1 - 3.5 mm, and more preferably 1.3 - 3.0 mm. The thicknesses of the veneers used for the production of the cross-laminated plywood can be the same for each veneer or can vary from one veneer to another. In one embodiment of the present invention, the veneers of the cross-laminated plywood have one and the same thickness. In one embodiment of the present invention, the veneers of the cross-laminated plywood have different thicknesses. In one embodiment of the present invention at least 20 % of the veneers of the cross-laminated plywood have a thickness which is at least 0.2 mm, and preferably at least 0.5 mm less or more than the thickness of the rest of the veneers in the cross-laminated plywood. In one embodiment of the present invention at least 20 % of the veneers of the cross-laminated plywood have a thickness of 0.2 - 3.5 mm, and preferably 0.5 - 2 mm, less or more than the thickness of the rest of the veneers in the cross-laminated plywood. In one embodiment of the present invention all the veneers of the cross-laminated plywood are equally thick, with the precision of 0.2 mm.

The moisture percentage of the different veneers used for producing the plywood can vary. In one embodiment of the present invention the average moisture percentage of the veneers to be used for producing cross-laminated plywood before applying the binder composition thereon is 1 - 9, and preferably 2 - 6. The above moisture values are measured in accordance with standard SFS-EN 322 (Wood-based panels. Determination of moisture content (1993)).

In one embodiment of the present invention at least one veneer is modified by heat treatment, chemical treatment, mechanical treatment, or by a combination thereof. In one embodiment of the present invention at least one veneer is modified by chemical treatment. When the veneers are modified or pretreated the dimensional stability thereof can be increased.

The inventors also found out that the use of this kind of a binder composition allowed the use of veneers with varying properties for cross-laminated plywood production. It was found out that the binder composition enables the production of good quality cross-laminated plywood even when using a process and/or materials of variable standard. Without limiting the invention to any specific theory of why the above advantage can be achieved, it is to be considered that the properties of the binder composition allowing a broad operating window in cross-laminated plywood production enables more flexibility in the production process as such.

The aqueous binder composition used for the production of cross-laminated plywood according to the present invention can be formed by different manners. The aqueous binder composition can be formed by mixing lignin with a previously produced composition comprising crosslinking agent polymerized with e.g. synthetic polymerizable substance. The binder composition can be formed by forming an aqueous composition comprising lignin, synthetic polymerizable substance and crosslinking agent, and by allowing polymerization reactions to take place between these reactant components under the influence of heating the composition.

In one embodiment of the present invention by varying the ratio of the amount of crosslinking agent to polymerizable substance, and especially the ratio of the amount of crosslinking agent, e.g. formaldehyde, to synthetic polymerizable substance, e.g. phenol, the properties of the formed binder composition are varied. By adjusting the ratio, it is possible to vary the amount of linear and branched chains in the binder composition, thus also affecting the molecular weight distribution as well as the polydispersity index of the formed binder composition. Also the ratio of the amount of catalyst to polymerizable substance, e.g. phenol, affects the molecular weight distribution and polydispersity index. Also the amount of lignin used in the process affects the molecular weight distribution of the final binder composition. The temperature and time, as well as other process parameters, may also affect the properties of the binder composition. Further, the molecular weight distribution of the binder composition can also be determined or analyzed during the production thereof. The binder composition production process can be stopped when the binder composition is found to have suitable properties, such as degree of condensation.

In one embodiment of the present invention the polymerizable substance comprises lignin and at least one compound selected from the class of phenols. In one embodiment of the present invention the polymerizable substance consists of lignin and at least one compound selected from the class of phenols. In one embodiment of the present invention the polymerizable substance comprises lignin and at least one of phenol, cresol, and resorcinol. In one embodiment of the present invention the polymerizable substance consists of lignin and at least one of phenol, cresol, and resorcinol. In one embodiment of the present invention the polymerizable substance comprises lignin and phenol. In one embodiment of the present invention the polymerizable substance consists of lignin and phenol.

In one embodiment of the present invention the crosslinking agent is selected from a group of aldehydes. In one embodiment of the present invention the group of aldehydes comprises an aldehyde, a derivative of an aldehyde, an aldehyde forming compound and any combination thereof. In one embodiment of the present invention the derivative of an aldehyde is hexamethylenetetramine, paraformaldehyde or trioxane. In one embodiment of the present invention the crosslinking agent is selected from a group consisting of an aromatic aldehyde, glyoxal, furfuryl alcohol, caprolactam and glycol compounds. The aromatic aldehyde can be furfuryl aldehyde. In one embodiment of the present invention the crosslinking agent is an aldehyde, and preferably formaldehyde, paraformaldehyde or a combination thereof.

In one embodiment of the present invention at least one catalyst is used for the production of the binder composition. In one embodiment of the present invention the catalyst is a base. In one embodiment of the present invention the catalyst is an alkali or an alkali earth hydroxide. In one embodiment of the present invention the catalyst comprises a salt or a hydroxide of an alkali metal. In one embodiment of the present invention the catalyst is selected from a group consisting of sodium hydroxide, potassium hydroxide and any mixture thereof. In one embodiment of the present invention the catalyst is an organic amine.

In this specification, unless otherwise stated, the expression "lignin" should be understood as lignin originating from any suitable lignin source. The lignin may include essentially pure lignin. By the expression "essentially pure lignin" should be understood as at least 90 % pure lignin, preferably at least 95 % pure lignin. In one embodiment of the present invention the essentially pure lignin comprises at most 10 %, preferably at most 5 %, of other components. Extractives and carbohydrates such as hemicelluloses can be mentioned as examples of such other components. In one embodiment of the present invention the lignin contains less than 10 weight-%, preferably less than 6 weight-%, and more preferably less than 4 weight-% of carbohydrates. The amount of carbohydrates present in lignin can be measured by high performance anion exchange chromatography with pulsed amperometric detector (HPAE-PAD) in accordance with standard SCAN-CM 71.

In one embodiment of the present invention the ash percentage of lignin is less than 7.5 weight-%, preferably less than 5 weight-%, and more preferably less than 3 weight-%. The ash content can be determined by carbonifying and quickly burning a lignin sample so that alkali salts are not melted before the organic matter has been burned (e.g. 20-200°C for 30 minutes, after which temperature is adjusted to 200-600°C for 1 h, and thereafter adjusting the temperature to 600-700°C for 1 hour), and finally the lignin sample is ignited at 700°C for 1h. Ash content of a lignin sample refers to the mass that remains of the sample after burning and ignition, and it is presented as per cent of the sample's dry content.

In one embodiment of the present invention the lignin is selected from a group consisting of kraft lignin, steam explosion lignin, biorefinery lignin, supercritical separation lignin, hydrolysis lignin, flash precipitated lignin, biomass originating lignin, lignin from alkaline pulping process, lignin from soda process, lignin from organosolv pulping and combinations thereof. In one embodiment of the present invention the lignin is wood based lignin. The lignin can originate from softwood, hardwood, annual plants or from a combination thereof.

In one embodiment of the present invention the lignin is Kraft lignin. By "kraft lignin" is to be understood in this specification, unless otherwise stated, lignin that originates from kraft black liquor. Black liquor is an alkaline aqueous solution of lignin residues, hemicellulose, and inorganic chemicals used in a kraft pulping process. The black liquor from the pulping process comprises components originating from different softwood and/or hardwood species in various proportions. Lignin can be separated from the black liquor by different, techniques including e.g. precipitation and filtration. Lignin usually begins precipitating at pH values below 11 - 12. Different pH values can be used in order to precipitate lignin fractions with different properties. These lignin fractions differ from each other by molecular weight distribution, e.g. Mw and Mn, polydispersity, hemicellulose and extractive contents. The molar mass of lignin precipitated at a higher pH value is higher than the molar mass of lignin precipitated at a lower pH value. Further, the molecular weight distribution of lignin fraction precipitated at a lower pH value is wider than of lignin fraction precipitated at a higher pH value. Also the wood species from which the lignin is separated may affect the molecular weight distribution thereof. The precipitated lignin can be purified from inorganic impurities, hemicellulose and wood extractives using acidic washing steps. Further purification can be achieved by filtration.

The use of Kraft lignin can be determined from the produced binder composition based on the sulphur content of the binder composition. The sulphur content of the produced binder composition can be determined by drying a binder composition sample at a temperature of 105 °C, after which SEM-EDS analysis is carried out, whereby one can determine the ratio of elements heavier than sodium. In one embodiment of the present invention the binder composition contains at least 1 weight-% of sulphur, preferably at least 2 weight-% of sulphur, and more preferably at least 5 weight-% of sulphur. In one embodiment of the present invention the binder composition contains 1 - 20 weight-% of sulphur, preferably 2 - 10 weight-% of sulphur.

In one embodiment of the present invention the lignin is flash precipitated lignin. The term "flash precipitated lignin" should be understood in this specification as lignin that has been precipitated from black liquor in a continuous process by decreasing the pH of a black liquor flow, under the influence of an over pressure of 200 - 1000 kPa, down to the precipitation level of lignin using a carbon dioxide based acidifying agent, preferably carbon dioxide, and by suddenly releasing the pressure for precipitating lignin. The method for producing flash precipitated lignin is disclosed in patent application FI 20106073. The residence time in the above method is under 300 s. The flash precipitated lignin particles, having a particle diameter of less than 2 pm, form agglomerates, which can be separated from black liquor using e.g. filtration. The advantage of the flash precipitated lignin is its higher reactivity compared to normal kraft lignin. The flash precipitated lignin can be purified and/or activated if needed for the further processing.

In one embodiment of the present invention the lignin is separated from pure biomass. The separation process can begin with liquidizing the biomass with strong alkali followed by a neutralization process. After the alkali treatment the lignin can be precipitated in a similar manner as presented above. In one embodiment of the present invention the separation of lignin from biomass comprises a step of enzyme treatment. The enzyme treatment modifies the lignin to be extracted from biomass. Lignin separated from pure biomass is sulphur-free.

In one embodiment of the present invention the lignin is steam explosion lignin. Steam explosion is a pulping and extraction technique that can be applied to wood and other fibrous organic material.

By "biorefinery lignin" is to be understood in this specification, unless otherwise stated, lignin that can be recovered from a refining facility or process where biomass is converted into fuel, chemicals and other materials.

By "supercritical separation lignin" is to be understood in this specification, unless otherwise stated, lignin that can be recovered from biomass using supercritical fluid separation or extraction technique. Supercritical conditions correspond to the temperature and pressure above the critical point for a given substance. In supercritical conditions, distinct liquid and gas phases do not exist. Supercritical water or liquid extraction is a method of decomposing and converting biomass into cellulosic sugar by employing water or liquid under supercritical conditions. The water or liquid, acting as a solvent, extracts sugars from cellulose plant matter and lignin remains as a solid particle.

In one embodiment of the present invention the lignin is hydrolysis lignin. Hydrolysed lignin can be recovered from paper-pulp or wood-chemical processes.

In one embodiment of the present invention the lignin originates from an organosolv process. Organosolv is a pulping technique that uses an organic solvent to solubilize lignin and hemicellulose.

In one embodiment of the present invention at least 30 weight-%, and preferably at least 50 weight-%, of the polymerizable substance originates from lignin. In one embodiment of the present invention 20 - 100 weight-%; 30 - 80 weight-%; or 40 - 60 weight-%, of the polymerizable substance originates from lignin. At least part of the synthetic polymerizable substance, e.g. phenol, usually used for producing a binder composition, e.g. a phenol-formaldehyde resin, can be replaced with lignin, which is a bio-based material.

In one embodiment of the present invention preferably at least 55 %, and more preferably at least 65 %, of the molecules in the binder composition have a molecular weight of above 3000 Da.

In one embodiment of the present invention, at most 85 %, and preferably at most 80 %, of the molecules in the binder composition have a molecular weight of above 3000 Da.

In one embodiment of the present invention preferably at least 7 %, more preferably 10 - 25, and even more preferably 13 - 18 %, of the molecules in the binder composition have a molecular weight of below 1000 Da.

In one embodiment of the present invention at least 50 % of the molecules in the binder composition have a molecular weight of above 3500 Da, and more preferably above 4000 Da.

In one embodiment of the present invention at least 15 % of the molecules in the binder composition have a molecular weight of below 2000 Da, and preferably below 1500 Da.

In one embodiment of the present invention at least 35 %, preferably at least 40 %, and more preferably at least 50 %, of the molecules in the binder composition have a molecular weight of above 5000 Da.

In one embodiment of the present invention at least 15, preferably at least 25 %, and more preferably at least 35 %, of the molecules in the binder composition have a molecular weight of above 10000 Da.

In one embodiment of the present invention, at least 5 %, and preferably at least 10 %, of the molecules in the binder composition have a molecular weight of above 30000 Da.

In one embodiment of the present invention, at most 40 %, and preferably at most 30 %, of the molecules in the binder composition have a molecular weight of above 30000 Da.

In one embodiment of the present invention, at most 70 weight-%, and preferably at most 60 weight-%, of the molecules in the binder composition have a molecular weight of above 10000 Da.

The molecular weight and the molecular weight distribution can be determined by size-exclusion-chromatography (SEC) (Dionex).

The inventors of the present invention surprisingly found out that a binder composition having a certain amount of molecules with a high molecular weight and a certain amount of molecules with a low molecular weight, advantageously affects the properties of the binder composition. The inventors found out that the when using this kind of binder composition for binding together at least two veneers, the molecules with the higher molecular weight will remain in the seam or the glue line while the molecules with lower molecular weight will penetrate into the wooden veneer and the molecules with the lowest molecular weight will penetrate to its cell wall structure thus strengthening the part of the veneer next to the glue-line, the glue-line itself, and the plywood. The part of the veneer next to the glue-line becomes a part of the net structure connected to the glue-line. The binder composition according to the present invention may thus aids in the formation of mechanical interlocking beneficially affecting the adhesion of the veneers.

The molecules with higher molecular weight advantageously remain in e.g. cracks or scratches on the surface of the veneer, on the surface of which the binder composition is applied, and thus strengthen these possible deficiencies on the surface of the veneer. As the molecules in the binder composition with higher molecular weight also remain in the glue-lines between veneers compared to being absorbed by the wood material, the plywood production process will become more flexible in view of operation time used for gluing together the veneers. The molecules in the binder composition with lower molecular weight will be absorbed into the wood material and strengthen the surface of the wood as such. Thanks to the advantageous molecular weight distribution of the binder composition according to the present invention, the part of the veneer next to the glue-line is strengthened. In addition, the glue-line itself is strengthened. An advantage of the binder composition according to the present invention is that its advantageous properties will remain even if there is some variation in the plywood production process and the production conditions thereof.

The polydispersity index of the binder composition used for the production of cross-laminated plywood according to the present invention is 6 or higher. In one embodiment of the present invention the polydispersity index of the binder composition is preferably above 7, more preferably above 9, and even more preferably above 10. In one embodiment of the present invention the polydispersity index of the binder composition is 6 - 30, and preferably 8 - 20. In one embodiment of the present invention the polydispersity index of the binder composition is preferably below 30, more preferably below 25, and even more preferably below 20. The rather high polydispersity index of the used binder composition ensures that molecular weight distribution of the binder composition is rather flat and that essentially no large distinct molecular weight peaks are seen.

In one embodiment of the present invention the gelling time of the binder composition is 2 - 8 minutes, preferably 5 - 7.5 minutes, and more preferably 5.5 - 7 minutes, as measured at a temperature of 130 °C. The gelling time can be determined by adding 0.5 ml of a sample to be tested in a test tube with a rod. The sample shall not be stirred. The test tube is then heated to 130 °C in a glycerin or oil bath without mixing. The time until the sample becomes pasty (melted solid) is measured after which the measurement is completed.

In principle, cross-laminated plywood consists of three or more layers of veneer sheets, each glued with its grain at right angle to adjacent layers (cross-bonding or cross-lamination). Laminated veneer lumber (LVL) is another wood product that consists of multiple layers of thin wood assembled with adhesives. The main difference between cross-laminated plywood and laminated veneer lumber is that LVL is strongly orientated because of parallel grain orientation of veneer sheets throughout the structure, whereas cross-laminated plywood is cross-bonded or cross-laminated with alternating grain orientations throughout the structure. I.e. laminated veneer lumber consists of layers of wood veneers laminated together with the grain of each veneer parallel primarily to the length of the finished product. The production of cross-laminated plywood enables to produce plywood with increased strength both in longitudinal direction and transverse direction. In general the cross-lamination may have an adverse effect to the plywood production process as the process is not continuous. For example the open time from glue spreading to pressing is different between the veneers for the plywood and plywood panels.

The cross-laminated plywood may comprise e.g. from three veneers up to dozens of veneers.

In one embodiment of the present invention, the cross-laminated plywood comprises a plurality of veneers with at most 55 %, preferably at most 35 %, and most preferably at most 10 %, of the glue-lines therein being situated directly between veneers with parallel grain direction.

In one embodiment of the present invention the cross-laminated plywood comprises at least 5, preferably at least 10, and more preferably at least 15 veneers.

In one embodiment of the present invention the cross-laminated plywood comprises a plurality of veneers with only one glue-line, on both sides of which the grain direction of the veneers is the same.

In one embodiment of the present invention the cross-laminated plywood comprises an uneven number of veneers with no glue-line, on both sides of which the grain direction of the veneers is the same.

The so-called open time in the plywood production process is typically 5 - 30 min but the open time may be even longer. An advantage of the binder composition according to the present invention is that it is beneficial when used for cross-bonded veneers where the open time varies. The binder composition according to the present invention has the advantage of having a combination of molecules with low, medium and high molecular weights. The molecules with a low molecular weight have surface wetting properties and the ability to penetrate into the veneers and to prevent dry outs, whereas high molecular weight molecules give better prepress tack and open time tolerance. However, molecules, with a high molecular weight, are not able to penetrate into the veneers, but mainly remain in the glue line. The advantage of the combination of molecules with different molecular weights is that over-flowing or over-penetration of the binder composition as well as drying of the binder composition at a too early stage is decreased or prevented even if the open time varies. The binder composition according to the present invention has the advantage of having a good prepress tack after prepress. This is beneficial for the following process stages, such as the hot press stage.

Even if there is variation in the open time during the plywood production process, it is possible to have a glue-line with high strength properties when the binder composition according to the present invention is used. This is important with cross-laminated plywood because the cross-lamination gives high strength properties for the longitudinal and the transverse direction of the plywood. Cross-lamination together with the binder composition according to the present invention results in plywood with high strength properties in the whole structure and especially in the glue lines.

In one embodiment of the present invention, at least the other of the outmost veneers of the plywood is cross-laminated in relation to its adjacent veneer, and preferably both of the outmost veneers of the plywood are cross-laminated in relation to their respective adjacent veneers.

The embodiments of the invention described hereinbefore may be used in any combination with each other. Several of the embodiments may be combined together to form a further embodiment of the invention. A method, a cross-laminated plywood, a use of a composition, to which the invention is related, may comprise at least one of the embodiments of the invention described hereinbefore.

An advantage of the present invention is that a cross-laminated plywood production method enabling a broad operating window to be used is achieved with the use of a binder composition according to the present invention. An advantage of the present invention is that a lower hot pressing temperature can be used in the cross-laminated plywood production process.

An advantage of the present invention is that a bio-based binder composition with properties especially suitable for cross-laminated plywood production can be formed.

An advantage of the present invention is that the strength of the cross-laminated plywood produced by the method according to the present invention is increased as the binder composition partly penetrates into the wood material and partly remains in the glue line.

### EXAMPLES

Reference will now be made in detail to the embodiments of the present invention, an example of which is illustrated in the accompanying drawing.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

### EXAMPLE 1 - Preparing a binder composition and the use thereof for producing cross-laminated plywood.

In this example a lignin-phenol-formaldehyde binder composition was produced.

The following procedure was applied. Firstly, a synthetic phenol-formaldehyde binder composition was produced by polymerizing phenol and formaldehyde in the presence of water and sodium hydroxide (NaOH) as a catalyst. Formaldehyde was added in a stepwise manner to an aqueous phenol composition and thereafter the temperature of the formed composition was increased up to 80 - 90 °C. The composition was cooked at this temperature until a viscosity value of 270 cP was reached. The viscosity was measured at 25 °C using a rotary viscometer (e.g. Brookfield). To this composition, lignin was physically mixed. I.e. the lignin was not polymerized with the phenol-formaldehyde composition. The lignin used was lignin separated from hardwood and softwood, and had an average molar mass of 5000 g/mol. The amounts of the different compounds used may vary and are obvious for a person skilled in the art.

The molecular weight distribution of the formed binder composition was determined by size-exclusion chromatography. The polydispersity index (PDI) was determined by size-exclusion chromatography. The polydispersity index (PDI) is a measure of the distribution of molecular mass in a given polymer sample. The PDI is calculated as the weight average molecular weight divided by the number average molecular weight. PDI indicates the distribution of individual molecular masses in a batch of polymers. The properties of the formed binder composition are indicated in the below table:

| Property | Binder composition of Example 1 |
|---|---|
| Percentage of the molecules having a molecular weight of above 3000 Da | 50 |
| Percentage of the molecules having a molecular weight of below 1000 Da | 22 |
| Percentage of the molecules having a molecular weight of above 5000 Da | 37 |
| Percentage of the molecules having a molecular weight of above 10000 Da | 15 |
| Polydispersity index | 8 |

The binder composition formed as above indicated was thereafter used for the production of different kinds of cross-laminated plywood. The following veneers were used for the cross-laminated plywood production:

| Type of veneer | Density of the wood (kg/m³) | Thickness of the veneers (mm) | Moisture percentage (%) |
|---|---|---|---|
| Spruce | 390 | 2.6 | 4.3 |
| Birch | 600 | 1.4 | 3.2 |

The density values were measured in the examples in this specification in accordance with standards SFS-EN 384 and ISO 3131.

The formed binder composition was applied on the surface of the veneers and the wood veneers were joined together by the binder composition. The wood veneers with the binder composition were pressed by hot-pressing technique. The plywood hot-pressing temperature used was about 130°C. The pressure used varied depending on the wood species used. For determining the optimum hot-pressing time needed for the different plywood, the temperature rise of the innermost glue line of the plywood panel was followed. The hot-pressing time was the time it took to reach 100°C, plus two minutes for curing the binder composition. The binder composition of the present invention was found suitable for gluing the tested wood veneers together and thus for manufacturing cross-laminated plywood. The bonding met the requirements of the standard EN 314-2 (class 1 and class 3) (SFS-EN 314-2. Plywood. Bonding quality. Part 2: Requirements. (1993)).

### EXAMPLE 2 - Preparing a binder composition and the use thereof for producing cross-laminated plywood.

In this example a lignin-phenol-formaldehyde binder composition was produced. The binder composition was formed following in a similar kind of procedure as presented in Example 11 below. The main differences between Example 2 and Example 11 are higher molar ratio of NaOH/phenol and the type of lignin used. The binder composition was produced under alkaline conditions. The lignin used in this example was Kraft lignin from softwood with an average molar mass of about 8000 g/mol. The weight ratio of lignin/phenol was 1:1

The viscosity of the binder composition was 442 cP. The molecular weight distribution of the formed binder composition was determined by size-exclusion chromatography. The polydispersity index was determined by size-exclusion-chromatography. The properties of the formed binder composition are indicated in the below table:

| Property | Binder composition of Example 2 |
|---|---|
| Percentage of the molecules having a molecular weight of above 3000 Da | 72 |
| Percentage of the molecules having a molecular weight of below 1000 Da | 13 |
| Percentage of the molecules having a molecular weight of above 5000 Da | 52 |
| Percentage of the molecules having a molecular weight of above 10000 Da | 42 |
| Polydispersity index | 13 |

The binder composition formed as above indicated was thereafter used for the production of different kinds of cross-laminated plywood. The following veneers were used for the cross-laminated plywood production:

| Type of veneer | Density of the wood (kg/m³) | Thickness of the veneers (mm) | Moisture percentage (%) |
|---|---|---|---|
| Spruce | 440 | 2.0 | 4.2 |
| Birch | 610 | 2.0 | 3.6 |

The formed binder composition was applied on the surface of the veneers and the wood veneers were joined together by the binder composition in a manner discussed above for Example 1. The binder composition of the present invention was found suitable for gluing the tested wood veneers together and thus for manufacturing cross-laminated plywood. The bonding met the requirements of the standard EN 314-2 (class 1 and class 3) (SFS-EN 314-2. Plywood. Bonding quality. Part 2: Requirements. (1993)).

### COMPARATIVE EXAMPLE 3 - Preparing a binder composition and the use thereof for producing cross-laminated plywood

In this comparative example a phenol-formaldehyde binder composition was produced.

The synthetic phenol formaldehyde binder composition was produced by polymerizing phenol and formaldehyde in the presence of sodium hydroxide (NaOH) as a catalyst. The binder composition was produced under alkaline conditions with a surplus of formaldehyde. The molar ratio of the formaldehyde/phenol/NaOH was 2.1:1:0.7.

Formaldehyde was added in a stepwise manner to an aqueous phenol composition and thereafter the temperature of the formed composition was increased up to 80 - 90 °C. The composition was cooked at this temperature until a viscosity value of 270 cP was reached. The viscosity was measured at 25 °C using a rotary viscometer.

The molecular weight distribution of the formed binder composition was determined by size-exclusion chromatography. The polydispersity index was determined by size-exclusion chromatography. The properties of the formed binder composition are indicated in the below table:

| Property | Binder composition of Comparative example 3 |
|---|---|
| Percentage of the molecules having a molecular weight of above 3000 Da | 50 |
| Percentage of the molecules having a molecular weight of below 1000 Da | 23 |
| Percentage of the molecules having a molecular weight of above 5000 Da | 39 |
| Percentage of the molecules having a molecular weight of above 10000 Da | 13 |
| Polydispersity index | 5 |

The binder composition formed as above indicated was thereafter used for the production of different kinds of cross-laminated plywood. The following veneers were used for the cross-laminated plywood production:

| Type of veneer | Density of the wood (kg/m³) | Thickness of the veneers (mm) | Moisture percentage (%) |
|---|---|---|---|
| Spruce | 440 | 2.0 | 4.2 |
| Birch | 610 | 2.0 | 3.6 |

The formed binder composition was applied on the surface of the veneers and the wood veneers were joined together by the binder composition in a manner discussed above for Example 1.

### EXAMPLES 4 - 10 - Preparing a binder composition and the use thereof for producing cross-laminated plywood

Further binder compositions were prepared in accordance with the procedure as presented in Example 2. The replacement level of lignin to phenol used in the examples was the following:

| Material | Weight-% of the polymerizable substance originating from lignin |
|---|---|
| Example 4 | 30 |
| Example 5 | 30 |
| Example 6 | 30 |
| Example 7 | 50 |
| Example 8 | 50 |
| Example 9 | 50 |
| Example 10 | 50 |

The molecular weight distribution of the formed binder compositions were determined by size-exclusion chromatography. The polydispersity indexes were determined by size-exclusion chromatography. The properties of the formed binder compositions are indicated in the below table.

| Binder composition | Percentage of the molecules having a molecular weight of above 3000 Da | Percentage of the molecules having a molecular weight of below 1000 Da | Percentage of the molecules having a molecular weight of above 5000 Da | Percentage of the molecules having a molecular weight of above 10000 Da | Polydis persity index |
|---|---|---|---|---|---|
| Example 4 | 68 | 15 | 46 | 35 | 10 |
| Example 5 | 65 | 18 | 54 | 33 | 10 |
| Example 6 | 63 | 17 | 51 | 39 | 12 |
| Example 7 | 66 | 11 | 55 | 33 | 11 |
| Example 8 | 69 | 14 | 58 | 46 | 15 |
| Example 9 | 59 | 14 | 48 | 27 | 7 |
| Example 10 | 84 | 8 | 77 | 58 | 16 |

The binder compositions 4 - 10 formed as above indicated were thereafter used for the production of different kinds of cross-laminated plywood. The following veneers were used for the cross-laminated plywood production:

| Type of veneer | Density of the wood (kg/m³) | Thickness of the veneers (mm) | Moisture percentage (%) |
|---|---|---|---|
| Spruce | 440 | 2.0 | 4.2 |
| Birch | 610 | 2.0 | 3.6 |

The formed binder composition was applied on the surface of the veneers and the wood veneers were joined together by the binder composition in a manner discussed above for Example 1. The binder compositions of the present invention were found suitable for gluing the tested wood veneers together and thus for manufacturing cross-laminated plywood. The bonding met the requirements of the standard EN 314-2 (class 1 and class 3) (SFS-EN 314-2. Plywood. Bonding quality. Part 2: Requirements. (1993)).

### EXAMPLE 11 - Preparing a binder composition and the use thereof for producing cross-laminated plywood.

In this example a lignin-phenol-formaldehyde binder composition was produced.

The lignin used in this example was Kraft lignin from softwood and hardwood with an average molar mass of about 5000 g/mol. The molar ratio of formaldehyde/polymerizable substance (phenol and lignin)/NaOH was 1.9:1:0.7., and weight ratio of lignin/phenol was 1:1.

Firstly, lignin was added to a composition comprising NaOH and water while heating the composition. Thereafter phenol was added after which part of the formaldehyde was added. The rest of the formaldehyde was added in a stepwise manner by heating the composition at a temperature of 73 - 78 °C. NaOH was then added to the composition and then the composition was heated at a temperature of 83 - 90 °C for almost three hours. Then the composition was cooled. The viscosity of the binder composition was 310 cP.

The molecular weight distribution of the formed binder composition was determined by size-exclusion chromatography. The polydispersity index was determined by size-exclusion-chromatography. The properties of the formed binder composition are indicated in the below table:

| Property | Binder composition of Example 2 |
|---|---|
| Percentage of the molecules having a molecular weight of above 3000 Da | 75 |
| Percentage of the molecules having a molecular weight of below 1000 Da | 9 |
| Percentage of the molecules having a molecular weight of above 5000 Da | 65 |
| Percentage of the molecules having a molecular weight of above 10000 Da | 40 |
| Polydispersity index | 10 |

The binder composition formed as above indicated was thereafter used for the production of different kinds of cross-laminated plywood. The following veneers were used for the cross-laminated plywood production:

| Type of veneer | Density of the wood (kg/m³) | Thickness of the veneers (mm) | Moisture percentage (%) |
|---|---|---|---|
| Spruce | 420 | 3.2 | 4.1 |
| Birch | 610 | 1.4 | 3.3 |
| Pine | 490 | 2.0 | 4.3 |

The formed binder composition was applied on the surface of the veneers and the wood veneers were joined together by the binder composition in a manner discussed above for Example 1. The binder composition of the present invention was found suitable for gluing the tested wood veneers together and thus for manufacturing cross-laminated plywood. The bonding met the requirements of the standard EN 314-2 (class 1 and class 3) (SFS-EN 314-2. Plywood. Bonding quality. Part 2: Requirements. (1993)).

The formed binder compositions were subjected to different measurements and tests. The following measurements were carried out:
1) Mechanical hardening of the binder compositions were measured via Automatic Bonding Evaluation System (ABES). ABES technique involves measuring the shear strength developed between two thin overlapping, parallel in grain veneer strips to which binder composition has been applied. The binder composition is cured under controlled conditions of temperature, pressure and pressing time, and then, immediately after bonding, the lap-shear bond strength is measured with an integrated unit. The bonds are not cooled prior to strength testing.

Small birch veneer specimens with size of 0.8 x 20 x 117 mm were cut from the conditioned veneer sheets. Liquid binder compositions from Comparative Example 3 and Example 2, respectively, were applied to one veneer surface to give a binder composition spread rate of 100 g/m². The open assembly time was 0 min, hot-pressing pressure was 2.0 MPa and platen temperature was 105 °C or 130 °C. The failure force was measured after 20, 40, 60, 90, 120 and 160 s.

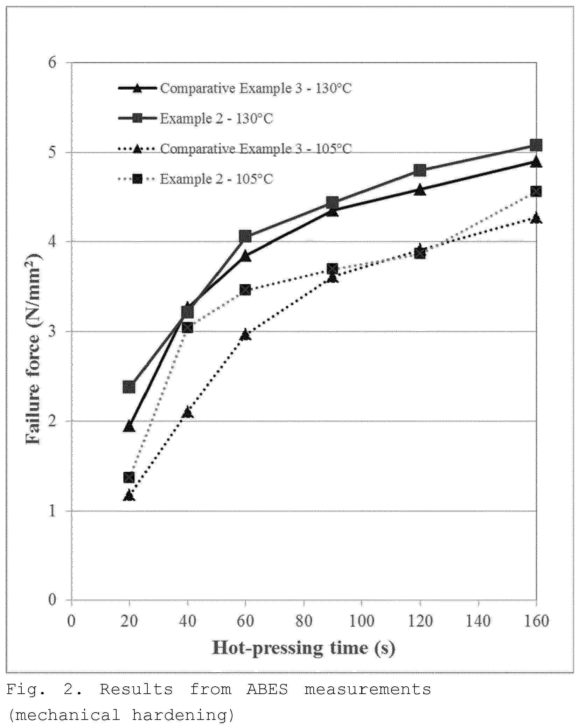

The results from the measurements are presented in Fig. 2. The results showed that the binder composition of Example 2, where the lignin replacement was 50 %, reached faster the adequate failure force especially at lower temperatures. This is a beneficial feature in hot-press time optimization.

The open assembly time tolerance or operating window of the two binder compositions was evaluated by using ABES technique. Again, small birch veneer specimens with size of 0.8 x 20 x 117 mm were cut from the conditioned veneer sheets. Liquid binder composition from Comparative Example 3 or Example 2, respectively, was applied to one veneer surface to give a resin spread rate of 100 g/m². Hot-pressing pressure was 2.0 MPa and platen temperature was 130 °C. The open assembly time varied between 0 and 60 minutes.

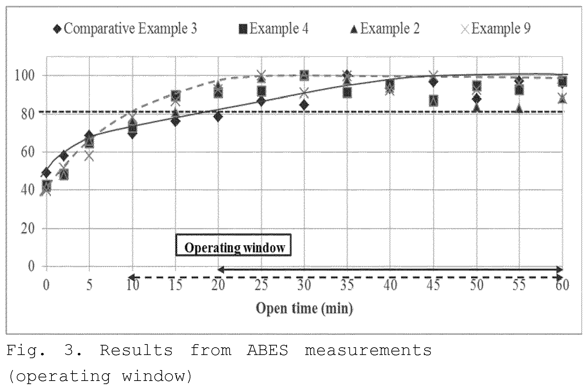

The results from the measurements are presented in Fig. 3, wherein Y-axis indicates percentages. 80 % is a sufficient value for the glue-line. The results show that the binder composition according to Example 2 reached the final glue line shear strength level faster than the binder composition according to Comparative Example 3 (10 minutes vs. 20 minutes). In addition, this reached level could be kept as far as 60 minutes. Thus, the operating window of the lignin based binder composition is wider than with currently used binder compositions (Comparative Example 3).

2) Chemical hardening of binder compositions was measured by Differential Scanning Calorimetry (DSC). Dynamic and isothermal measurement runs were used. Measurements were done in sealed cold cells under oxygen atmosphere. The binder composition sample size was approximately 5 mg. Firstly, isothermal DSC measurement was performed at 105°C. Secondly, to analyse the post-hardening or amount of unreacted resins, a dynamic DSC measurements from 30 °C up to 250°C at a rate of 10 °C/min were performed.

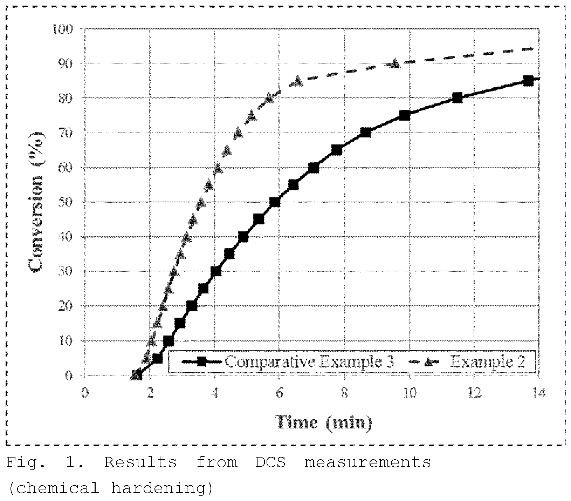

The results from the measurements are presented in Fig. 1. The results show that 80 % of binder composition according to Example 2 has been cured after 5.7 minutes, while it takes 11.5 minutes for the binder composition according to Comparative Example 3 to reach the same level of curing. The heat of reaction (J/g) during post-curing was at the same level with both binder compositions, i.e. there was no significant difference in the amount of unreacted binder composition. The lignin based binder composition (Example 2) cure faster than binder composition without the lignin (Comparative Example 3), especially at lower temperatures.

3) The gelling time of different binder compositions were determined. The gelling time was determined by adding 0.5 ml of a sample to be tested in a test tube with a rod. The sample was not to be stirred. The test tube was then heated to 130 °C in a glycerin or oil bath without mixing. The time until the sample became pasty (melted solid) was measured after which the measurement was completed.

The measurement was carried out for the binder compositions according to Comparative Example 3, Example 2, Example 4 and Example 9, respectively. The results are indicated in the below table.

**Table. Results from the gelling time measurements**

| | Gelling time (min) |
|---|---|
| Comparative Example 3 | 8, 8 |
| Example 4 | 6, 5 |
| Example 2 | 5, 9 |
| Example 9 | 5, 9 |

From the above table it can be seen that the gelling time is decreased when using the lignin containing binder compositions according to the present invention.

4) Mill trial was carried out with the binder composition according to Example 11. The binder composition according to Example 11 was used to produce a plywood glue with a target viscosity of 40-50 s (FC6) according to SFS-EN ISO 2431 (Paints and varnishes - Determination of flow time by use of flow cups. (2011)) after 2 hours. The adhesive was produced with the following:

| | |
|---|---|
| Binder composition according to Example 11 | 350 kg |
| Commercial hardener | 60 kg |
| Water | 66 kg |

The adhesive formulation was used to produce 9-ply birch plywood panels in mill scale. The spreading rate of the adhesive formulation was about 165 g/m². Panels were pre-pressed for 8 minutes at 1.0 MPa and then hot-pressed for 11 minutes at 130°C and 1.7 MPa. The open time varied between 10 to 30 minutes. Bond quality from 16 panels (originated from 8 lay ups, 16 panels per each) was measured according to EN 314 after soaking and boiling pre-treatments. The results are presented in the below table.

| Pretreatment | Shear strength (N/mm2) | Wood failure-% |
|---|---|---|
| Soaking | 2.2 | 96 |
| Boiling | 1.8 | 94 |

A corresponding test was carried out using the binder composition according to Comparative Example 3. The results received are presented in the below table.

| Pretreatment | Shear strength (N/mm2) | Wood failure-% |
|---|---|---|
| Soaking | 2.5 | 93 |
| Boiling | 2.2 | 98 |

In the binder production method presented in the examples above, phenol and formaldehyde are used. However, other polymerizable substance or crosslinking agent can be equally well used in the binder composition production method as will be obvious for the skilled person based on this specification. Also other wood veneers than birch veneers or spruce veneers can be equally well used for the production of cross-laminated plywood as will be obvious for the skilled person based on this specification.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for producing cross-laminated plywood, **characterized in that** the method comprises applying an aqueous binder composition on at least one surface of at least one veneer, wherein the aqueous binder composition is prepared by using at least polymerizable substance and crosslinking agent, and wherein:
- the polymerizable substance comprises lignin and at least one compound selected from the class of phenols, wherein the lignin contains less than 10 weight-% of carbohydrates;
- at least 50 % of the molecules in the binder composition have a molecular weight of above 3000 Da and at least 5 % of the molecules in the binder composition have a molecular weight of below 1000 Da; and
- the polydispersity index of the binder composition is 6 or higher.

2. The method of claim 1, wherein 20 - 100 weight-%; 30 - 80 weight-%; or 40 - 60 weight-%, of the polymerizable substance originates from lignin.

3. The method of any one of claims 1 - 2, wherein at most 85 %, and preferably at most 80 %, of the molecules in the binder composition have a molecular weight of above 3000 Da.

4. The method of any one of claims 1 - 3, wherein preferably at least 7 %, more preferably 10 - 25 %, and even more preferably 13 - 18 %, of the molecules in the binder composition have a molecular weight of below 1000 Da.

5. The method of any one of claims 1 - 4, wherein at least 15 % of the molecules in the binder composition have a molecular weight of below 2000 Da, and preferably below 1500 Da.

6. The method of any one of claim 1 - 5, wherein at most 40 %, and preferably at most 30 %, of the molecules in the binder composition have a molecular weight of above 30000 Da; or
wherein at most 70 weight-%, and preferably at most 60 weight-%, of the molecules in the binder composition have a molecular weight of above 10000 Da.

7. The method of any one of claims 1 - 6, wherein the polydispersity index of the binder composition is 6 - 30, and preferably 8 - 20.

8. Use of an aqueous binder composition for the production of cross-laminated plywood, wherein the aqueous binder composition is prepared by using at least polymerizable substance and crosslinking agent, **characterized in that**:
- the polymerizable substance comprises lignin and at least one compound selected from the class of phenols, wherein the lignin contains less than 10 weight-% of carbohydrates;
- at least 50 % of the molecules in the binder composition have a molecular weight of above 3000 Da and at least 5 % of the molecules in the binder composition have a molecular weight of below 1000 Da; and
- the polydispersity index of the binder composition is 6 or higher.

9. The use of claim 8, wherein 20 - 100 weight-%; 30 - 80 weight-%; or 40 - 60 weight-%, of the polymerizable substance originates from lignin.

10. The use of any one of claims 8 - 9, wherein at most 85 %, and preferably at most 80 %, of the molecules in the binder composition have a molecular weight of above 3000 Da.

11. The use of any one of claims 8 - 10, wherein preferably at least 7 %, more preferably 10 - 25 %, and even more preferably 13 - 18 %, of the molecules in the binder composition have a molecular weight of below 1000 Da.

12. The use of any one of claims 8 - 11, wherein at least 15 % of the molecules in the binder composition have a molecular weight of below 2000 Da, and preferably below 1500 Da.

13. The use of any one of claims 8 - 12, wherein at most 40 %, and preferably at most 30 %, of the molecules in the binder composition have a molecular weight of above 30000 Da, or
wherein at most 70 weight-%, and preferably at most 60 weight-%, of the molecules in the binder composition have a molecular weight of above 10000 Da.

14. The use of any one of claims 8 - 13, wherein the polydispersity index of the binder composition is 6 - 30, and preferably 8 - 20.

15. The use of any one of claims 8 - 14, wherein the gelling time of the binder composition is 2 - 8 minutes, preferably 5 - 7.5 minutes, and more preferably 5.5 - 7 minutes, as measured at a temperature of 130 °C.

16. The use of any one of claims 8 - 15, wherein the lignin contains less than 6 weight-%, and more preferably less than 4 weight-% of carbohydrates.

17. The use of any one of claims 8 - 16, wherein the ash percentage of lignin is less than 7.5 weight%, preferably less than 5 weight-%, and more preferably less than 3 weight-%.

18. Cross-laminated plywood comprising at least two veneers glued together with the aqueous binder composition as defined in claim 8.

19. The cross-laminated plywood of claim 18, wherein the cross-laminated plywood comprises a plurality of veneers with at most 55 %, preferably at most 35 %, and most preferably at most 10 %, of the glue-lines therein being situated directly between veneers with parallel grain direction.

20. The cross-laminated plywood of any one of claims 18 - 19, wherein at least the other of the outmost veneers of the plywood is cross-laminated in relation to its adjacent veneer, and preferably both of the outmost veneers of the plywood are cross-laminated in relation to their respective adjacent veneers.

21. The cross-laminated plywood of any one of claims 18 - 20, wherein 20 - 100 weight-%; 30 - 80 weight-%; or 40 - 60 weight-%, of the polymerizable substance originates from lignin.

22. The cross-laminated plywood of any one of claims 18 - 21, wherein at most 85 %, and preferably at most 80 %, of the molecules in the binder composition have a molecular weight of above 3000 Da.

23. The cross-laminated plywood of any one of claims 18 - 22, wherein preferably at least 7 %, more preferably 10 - 25 %, and even more preferably 13 - 18 %, of the molecules in the binder composition have a molecular weight of below 1000 Da.

24. The cross-laminated plywood of any one of claims 18 - 23, wherein at least 15 % of the molecules in the binder composition have a molecular weight of below 2000 Da, and preferably below 1500 Da.

25. The cross-laminated plywood of any one of claims 18 - 24, wherein at most 40 %, and preferably at most 30 %, of the molecules in the binder composition have a molecular weight of above 30000 Da; or
wherein at most 70 weight-%, and preferably at most 60 weight-%, of the molecules in the binder composition have a molecular weight of below 10000 Da.

26. The cross-laminated plywood of any one of claims 18 - 25, wherein the polydispersity index of the binder composition is 6 - 30, and preferably 8 - 20.

27. Plywood, **characterized in that** the binder composition as defined in any one of claims 8 - 17 is used for the production of the plywood.

28. The plywood of claim 27, wherein the plywood is laminated veneer lumber.

29. Use of the binder composition as defined in any one of claims 8 - 17 for gluing together at least two veneers.

## Patentansprüche

1. Verfahren zur Herstellung von kreuzweise verleimtem Sperrholz, **dadurch gekennzeichnet, dass** das Verfahren das Auftragen einer wässrigen Bindemittelzusammensetzung auf mindestens eine Oberfläche mindestens eines Furniers umfasst, wobei die wässrige Bindemittelzusammensetzung unter Verwendung mindestens einer polymerisierbaren Substanz und eines Vernetzungsmittels hergestellt wird, und wobei:
- die polymerisierbare Substanz Lignin und mindestens eine Verbindung aus der Klasse der Phenole umfasst, wobei das Lignin weniger als 10 Gew.-% Kohlenhydrate enthält;
- mindestens 50 % der Moleküle in der Bindemittelzusammensetzung ein Molekulargewicht von über 3000 Da aufweisen und mindestens 5 % der Moleküle in der Bindemittelzusammensetzung ein Molekulargewicht von unter 1000 Da aufweisen; und
- der Polydispersitätsindex der Bindemittelzusammensetzung 6 oder höher ist.

2. Verfahren nach Anspruch 1, bei dem 20 - 100 Gew.-%, 30 - 80 Gew.-% oder 40 - 60 Gew.-% der polymerisierbaren Substanz aus Lignin stammen.

3. Verfahren nach mindestens einem der Ansprüche 1 - 2, bei dem höchstens 85 % und vorzugsweise höchstens 80 % der Moleküle in der Bindemittelzusammensetzung ein Molekulargewicht von über 3000 Da aufweisen.

4. Verfahren nach mindestens einem der Ansprüche 1 - 3, bei dem vorzugsweise mindestens 7 %, bevorzugter 10 bis 25 % und noch bevorzugter 13 bis 18 % der Moleküle in der Bindemittelzusammensetzung ein Molekulargewicht von unter 1000 Da aufweisen.

5. Verfahren nach mindestens einem der Ansprüche 1 - 4, bei dem mindestens 15 % der Moleküle in der Bindemittelzusammensetzung ein Molekulargewicht von unter 2000 Da und vorzugsweise unter 1500 Da aufweisen.

6. Verfahren nach mindestens einem der Ansprüche 1 - 5, bei dem höchstens 40 % und vorzugsweise höchstens 30 % der Moleküle in der Bindemittelzusammensetzung ein Molekulargewicht von über 30000 Da aufweisen; oder
bei dem höchstens 70 Gew.-% und vorzugsweise höchstens 60 Gew.-% der Moleküle in der Bindemittelzusammensetzung ein Molekulargewicht von mehr als 10000 Da aufweisen.

7. Verfahren nach mindestens einem der Ansprüche 1 - 6, bei dem der Polydispersitätsindex der Bindemittelzusammensetzung 6 - 30 und vorzugsweise 8 - 20 beträgt.

8. Verwendung einer wässrigen Bindemittelzusammensetzung für die Herstellung von kreuzweise verleimtem Sperrholz, wobei die wässrige Bindemittelzusammensetzung unter Verwendung mindestens einer polymerisierbaren Substanz und eines Vernetzungsmittels hergestellt wird, **dadurch gekennzeichnet, dass**:
- die polymerisierbare Substanz Lignin und mindestens eine Verbindung aus der Klasse der Phenole umfasst, wobei das Lignin weniger als 10 Gew.-% Kohlenhydrate enthält;
- mindestens 50 % der Moleküle in der Bindemittelzusammensetzung ein Molekulargewicht von über 3000 Da aufweisen und mindestens 5 % der Moleküle in der Bindemittelzusammensetzung ein Molekulargewicht von unter 1000 Da aufweisen; und
- der Polydispersitätsindex der Bindemittelzusammensetzung 6 oder höher ist.

9. Verwendung nach Anspruch 8, wobei 20 - 100 Gew.-%, 30 - 80 Gew.-% oder 40 - 60 Gew.-% der polymerisierbaren Substanz aus Lignin stammen.

10. Verwendung nach mindestens einem der Ansprüche 8 - 9, wobei höchstens 85 % und vorzugsweise höchstens 80 % der Moleküle in der Bindemittelzusammensetzung ein Molekulargewicht von über 3000 Da aufweisen.

11. Verwendung nach mindestens einem der Ansprüche 8 - 10, wobei vorzugsweise mindestens 7 %, bevorzugter 10 bis 25 % und noch bevorzugter 13 bis 18 % der Moleküle in der Bindemittelzusammensetzung ein Molekulargewicht von unter 1000 Da aufweisen.

12. Verwendung nach mindestens einem der Ansprüche 8 - 11, wobei mindestens 15 % der Moleküle in der Bindemittelzusammensetzung ein Molekulargewicht von unter 2000 Da und vorzugsweise unter 1500 Da aufweisen.

13. Verwendung nach mindestens einem der Ansprüche 8 - 12, wobei höchstens 40 % und vorzugsweise höchstens 30 % der Moleküle in der Bindemittelzusammensetzung ein Molekulargewicht von über 30000 Da aufweisen; oder
wobei höchstens 70 Gew.-% und vorzugsweise höchstens 60 Gew.-% der Moleküle in der Bindemittelzusammensetzung ein Molekulargewicht von mehr als 10000 Da aufweisen.

14. Verwendung nach mindestens einem der Ansprüche 8 - 13, wobei der Polydispersitätsindex der Bindemittelzusammensetzung 6 - 30 und vorzugsweise 8 - 20 beträgt.

15. Verwendung nach mindestens einem der Ansprüche 8 - 14, wobei die Gelierzeit der Bindemittelzusammensetzung 2 - 8 Minuten, vorzugsweise 5 - 7,5 Minuten und noch bevorzugter 5,5 - 7 Minuten beträgt, gemessen bei einer Temperatur von 130 °C.

16. Verwendung nach mindestens einem der Ansprüche 8 - 15, wobei das Lignin weniger als 6 Gew.-% und vorzugsweise weniger als 4 Gew.-% an Kohlenhydraten enthält.

17. Verwendung nach mindestens einem der Ansprüche 8 - 16, wobei der Ascheanteil des Lignins weniger als 7,5 Gew.-%, vorzugsweise weniger als 5 Gew.-% und besonders bevorzugt weniger als 3 Gew.-% beträgt.

18. Kreuzweise verleimtes Sperrholz, das mindestens zwei mit der in Anspruch 8 definierten wässrigen Bindemittelzusammensetzung verleimte Furniere umfasst.

19. Kreuzweise verleimtes Sperrholz nach Anspruch 18, wobei das kreuzweise verleimte Sperrholz eine Vielzahl von Furnieren umfasst, wobei höchstens 55 %, vorzugsweise höchstens 35 % und am meisten bevorzugt höchstens 10 % der Leimfugen darin direkt zwischen Furnieren mit paralleler Faserrichtung liegen.

20. Kreuzweise verleimtes Sperrholz nach mindestens einem der Ansprüche 18 - 19, wobei mindestens das andere der äußersten Furniere des Sperrholzes in Bezug auf sein benachbartes Furnier kreuzweise verleimt ist, und vorzugsweise beide äußersten Furniere des Sperrholzes in Bezug auf ihre jeweiligen benachbarten Furniere kreuzweise verleimt sind.

21. Kreuzweise verleimtes Sperrholz nach mindestens einem der Ansprüche 18 - 20, wobei 20 - 100 Gew.-%, 30 - 80 Gew.-% oder 40 - 60 Gew.-% der polymerisierbaren Substanz aus Lignin stammen.

22. Kreuzweise verleimtes Sperrholz nach mindestens einem der Ansprüche 18 - 21, wobei höchstens 85 % und vorzugsweise höchstens 80 % der Moleküle in der Bindemittelzusammensetzung ein Molekulargewicht von über 3000 Da aufweisen.

23. Kreuzweise verleimtes Sperrholz nach mindestens einem der Ansprüche 18 - 22, wobei vorzugsweise mindestens 7 %, bevorzugter 10 bis 25 % und noch bevorzugter 13 bis 18 % der Moleküle in der Bindemittelzusammensetzung ein Molekulargewicht von unter 1000 Da aufweisen.

24. Kreuzweise verleimtes Sperrholz nach mindestens einem der Ansprüche 18 - 23, wobei mindestens 15 % der Moleküle in der Bindemittelzusammensetzung ein Molekulargewicht von unter 2000 Da und vorzugsweise unter 1500 Da aufweisen.

25. Kreuzweise verleimtes Sperrholz nach mindestens einem der Ansprüche 18 - 24, wobei höchstens 40 % und vorzugsweise höchstens 30 % der Moleküle in der Bindemittelzusammensetzung ein Molekulargewicht von über 30000 Da aufweisen; oder
wobei höchstens 70 Gew.-% und vorzugsweise höchstens 60 Gew.-% der Moleküle in der Bindemittelzusammensetzung ein Molekulargewicht von mehr als 10000 Da aufweisen.

26. Kreuzweise verleimtes Sperrholz nach mindestens einem der Ansprüche 18 - 25, wobei der Polydispersitätsindex der Bindemittelzusammensetzung 6 - 30 und vorzugsweise 8 - 20 beträgt.

27. Sperrholz, **dadurch gekennzeichnet, dass** die Bindemittelzusammensetzung nach mindestens einem der Ansprüche 8 - 17 für die Herstellung des Sperrholzes verwendet wird.

28. Sperrholz nach Anspruch 27, wobei es sich bei dem Sperrholz um laminiertes Furnierschnittholz handelt.

29. Verwendung der in mindestens einem der Ansprüche 8 - 17 definierten Bindemittelzusammensetzung zum Verleimen von mindestens zwei Furnieren.

## Revendications

1. Procédé de production de contreplaqué stratifié croisé, **caractérisé en ce que** le procédé comprend l'application d'une composition de liant aqueuse sur au moins une surface d'au moins une feuille de placage, dans lequel la composition de liant aqueuse est préparée en utilisant au moins une substance polymérisable et un agent de réticulation, et dans lequel :
- la substance polymérisable comprend de la lignine et au moins un composé sélectionné parmi la classe de phénols, dans lequel la lignine contient moins de 10 % en poids d'hydrates de carbone ;
- au moins 50 % des molécules de la composition de liant présentent un poids moléculaire supérieur à 3000 Da et au moins 5 % des molécules de la composition de liant présentent un poids moléculaire inférieur à 1000 Da ; et
- l'indice de polydispersité de la composition de liant est de 6 ou plus.

2. Procédé selon la revendication 1, dans lequel 20 à 100 % en poids ; 30 à 80 % en poids ; ou 40 à 60 % en poids, de la substance polymérisable provient de la lignine.

3. Procédé selon l'une quelconque des revendications 1 à 2, dans lequel au maximum 85 %, et de préférence au maximum 80 %, des molécules de la composition de liant présentent un poids moléculaire supérieur à 3000 Da.

4. Procédé selon l'une quelconque des revendications 1 à 3, dans lequel de préférence au moins 7 %, plus préférentiellement 10 à 25 %, et encore plus préférentiellement 13 à 18 %, des molécules de la composition de liant présentent un poids moléculaire inférieur à 1000 Da.

5. Procédé selon l'une quelconque des revendications 1 à 4, dans lequel au moins 15 % des molécules de la composition de liant présentent un poids moléculaire inférieur à 2000 Da, et de préférence inférieur à 1500 Da.

6. Procédé selon l'une quelconque des revendications 1 à 5, dans lequel au maximum 40 %, et de préférence au maximum 30 %, des molécules de la composition de liant présentent un poids moléculaire supérieur à 30000 Da ; ou
dans lequel au maximum 70 % en poids, et de préférence au maximum 60 % en poids, des molécules de la composition de liant présentent un poids moléculaire supérieur à 10000 Da.

7. Procédé selon l'une quelconque des revendications 1 à 6, dans lequel l'indice de polydispersité de la composition de liant est de 6 à 30, et de préférence de 8 à 20.

8. Utilisation d'une composition de liant aqueuse pour la production de contreplaqué stratifié croisé, dans laquelle la composition de liant aqueuse est préparée en utilisant au moins une substance polymérisable et un agent de réticulation, **caractérisée en ce que** :
- la substance polymérisable comprend de la lignine et au moins un composé sélectionné parmi la classe de phénols, dans lequel la lignine contient moins de 10 % en poids d'hydrates de carbone ;
- au moins 50 % des molécules de la composition de liant présentent un poids moléculaire supérieur à 3000 Da et au moins 5 % des molécules de la composition de liant présentent un poids moléculaire inférieur à 1000 Da ; et
- l'indice de polydispersité de la composition de liant est de 6 ou plus.

9. Utilisation selon la revendication 8, dans laquelle 20 à 100 % en poids ; 30 à 80 % en poids ; ou 40 à 60 % en poids, de la substance polymérisable provient de la lignine.

10. Utilisation selon l'une quelconque des revendications 8 à 9, dans laquelle au maximum 85 %, et de préférence au maximum 80 %, des molécules de la composition de liant présentent un poids moléculaire supérieur à 3000 Da.

11. Utilisation selon l'une quelconque des revendications 8 à 10, dans laquelle de préférence au moins 7 %, plus préférentiellement 10 à 25 %, et encore plus préférentiellement 13 à 18 %, des molécules de la composition de liant présentent un poids moléculaire inférieur à 1000 Da.

12. Utilisation selon l'une quelconque des revendications 8 à 11, dans laquelle au moins 15 % des molécules de la composition de liant présentent un poids moléculaire inférieur à 2000 Da, et de préférence inférieur à 1500 Da.

13. Utilisation selon l'une quelconque des revendications 8 à 12, dans laquelle au maximum 40 %, et de préférence au maximum 30 %, des molécules de la composition de liant présentent un poids moléculaire supérieur à 30000 Da, ou
dans laquelle au maximum 70 % en poids, et de préférence au maximum 60 % en poids, des molécules de la composition de liant présentent un poids moléculaire supérieur à 10000 Da.

14. Utilisation selon l'une quelconque des revendications 8 à 13, dans laquelle l'indice de polydispersité de la composition de liant est de 6 à 30, et de préférence de 8 à 20.

15. Utilisation selon l'une quelconque des revendications 8 à 14, dans laquelle le temps de gélification de la composition de liant est de 2 à 8 minutes, de préférence de 5 à 7,5 minutes, et plus préférentiellement de 5,5 à 7 minutes, comme mesuré à une température de 130 °C.

16. Utilisation selon l'une quelconque des revendications 8 à 15, dans laquelle la lignine contient moins de 6 % en poids, et plus préférentiellement moins de 4 % en poids d'hydrates de carbone.

17. Utilisation selon l'une quelconque des revendications 8 à 16, dans laquelle le pourcentage de cendres de lignine est inférieur à 7,5 % en poids, de préférence inférieur à 5 % en poids, et plus préférentiellement inférieur à 3 % en poids.

18. Contreplaqué stratifié croisé comprenant au moins deux placages collés l'un à l'autre avec la composition de liant aqueuse telle que définie dans la revendication 8.

19. Contreplaqué stratifié croisé selon la revendication 18, dans lequel le contreplaqué stratifié croisé comprend une pluralité de feuilles de placage avec au maximum 55 %, de préférence au maximum 35 % et le plus préférentiellement au maximum 10 %, des lignes de colle qui s'y trouvent étant situées directement entre les feuilles de placage avec une direction de grain parallèle.

20. Contreplaqué stratifié croisé selon l'une quelconque des revendications 18 à 19, dans lequel au moins l'autre des feuilles de placage externes du contreplaqué est stratifiée à couches croisées par rapport à sa feuille de placage adjacente et, de préférence, les deux feuilles de placage externes du contreplaqué sont stratifiées à couches croisées par rapport à leurs feuilles de placage adjacentes respectives.

21. Contreplaqué stratifié croisé selon l'une quelconque des revendications 18 à 20, dans lequel 20 à 100 % en poids ; 30 à 80 % en poids ; ou 40 à 60 % en poids, de la substance polymérisable provient de la lignine.

22. Contreplaqué stratifié croisé selon l'une quelconque des revendications 18 à 21, dans lequel au maximum 85 %, et de préférence au maximum 80 %, des molécules de la composition de liant présentent un poids moléculaire supérieur à 3000 Da.

23. Contreplaqué stratifié croisé selon l'une quelconque des revendications 18 à 22, dans lequel de préférence au moins 7 %, plus préférentiellement 10 à 25 %, et encore plus préférentiellement 13 à 18 %, des molécules de la composition de liant présentent un poids moléculaire inférieur à 1000 Da.

24. Contreplaqué stratifié croisé selon l'une quelconque des revendications 18 à 23, dans lequel au moins 15 % des molécules de la composition de liant présentent un poids moléculaire inférieur à 2000 Da, et de préférence inférieur à 1500 Da.

25. Contreplaqué stratifié croisé selon l'une quelconque des revendications 18 à 24, dans lequel au maximum 40 %, et de préférence au maximum 30 %, des molécules de la composition de liant présentent un poids moléculaire supérieur à 30000 Da ; ou
dans lequel au maximum 70 % en poids, et de préférence au maximum 60 % en poids, des molécules de la composition de liant présentent un poids moléculaire supérieur à 10000 Da.

26. Contreplaqué stratifié croisé selon l'une quelconque des revendications 18 à 25, dans lequel l'indice de polydispersité de la composition de liant est de 6 à 30, et de préférence de 8 à 20.

27. Contreplaqué, **caractérisé en ce que** la composition de liant telle que définie dans l'une quelconque des revendications 8 à 17 est utilisée pour la production du contreplaqué.

28. Contreplaqué selon la revendication 27, dans lequel le contreplaqué est du bois en placage stratifié.

29. Utilisation de la composition de liant telle que définie dans l'une quelconque des revendications 8 à 17 pour coller ensemble au moins deux feuilles de placage.
